# EUROPEAN PATENT APPLICATION

(11) **EP 0 628 754 A1**
(43) Date of publication of application: **14.12.1994**
(21) Application number: 94304119.4
(22) Date of filing: 08.06.1994
(51) Int. Cl.: F16H 61/02

(54) **Auxiliary transmission system and input splitter therefor**

(30) Priority: 10.06.1993 GB 9312014
(71) Applicant: EATON CORPORATION, Cleveland Ohio 44114 (US)
(72) Inventor: Harper, Joseph Frederick Brian, Sale, Cheshire M33 3GW (GB)
(74) Representative: Douglas, John Andrew

(57) **Abstract**

An input auxiliary transmission system is disclosed for a compound transmission (15) comprising an auxiliary transmission section (17) in series with a change gear mechanical main transmission section 19. The auxiliary section includes an input splitter (41) including first (53,47) and second (53,49) jaw clutches. When each of the jaw clutches is disengaged, the splitter is in a third position in which the input shaft (13) is disengaged from the auxiliary section output gear (45). The invention provides a fluid pressure actuator (61) having a third position operable to move the jaw clutch to the disengaged condition. The transmission includes means (121) to sense the shift mechanism (21) of the main section being in a neutral condition, and valve means (89) which communicates pressurized fluid to the actuator (61) to move it to its third position, thus eliminating a major portion of the inertia as the main transmission section 19 passes through neutral prior to making a gear shift. As a result, it is possible for the synchronizers in the main section to be much smaller and less expensive.

## Description

### RELATED APPLICATION

This application is related to British Application Serial No. 9312014.5, filed June 10, 1993.

### BACKGROUND OF THE DISCLOSURE

The present invention relates to a compound change-gear vehicular transmission having an input auxiliary section of the splitter type, preferably connected in series with a mechanical main transmission section, preferably of the synchronized type. In particular, the present invention relates to such a transmission having an input auxiliary section including a splitter section utilizing selectively engageable and disengageable jaw clutches, and will be described in connection therewith.

Compound mechanical transmissions of the input splitter type, and compound transmissions utilizing input auxiliary sections having clutch devices are known in the art, as may be seen by reference to U.S. Patent Nos. 2,886,982; 3,741,035; and 4,485,692, the disclosures of which are incorporated herein by reference.

Automatic and semi-automatic transmissions and clutch controls therefore are known in the prior art, as may be seen by reference to U.S. Patent Nos. 4,081,065; 4,361,060; and 4,648,290, the disclosures of which are incorporated herein by reference.

Synchronized mechanical change-gear transmissions and transmission sections are also well known in the prior art, as may be seen by reference to U.S. Patent Nos. 4,018,319; 4,373,403; and 4,432,251, the disclosures of which are incorporated herein by reference.

In compound mechanical change-gear transmissions of the type having an input auxiliary section and a change-gear mechanical main transmission section, it has become common practice to provide the main transmission section with synchronizers, in accordance with the teachings of the above-incorporated references. In synchronized main transmission sections for relatively heavy-duty commercial truck applications, the synchronizers are subjected to high inertia loads, resulting primarily from the size of the gear train components in the main transmission section, and also the size of the fly wheel in the main engine clutch.

As a result of such high inertia loads, relatively larger and more expensive synchronizers are required, in order for the transmission to achieve the desired level of life, and reliability. Unfortunately, larger, heavier synchronizers in turn require something such as a power assist in order to reduce operator effort and fatigue, thus adding further complication and expense to the synchronizer system.

U.S. Patent No. 4,882,951, which is assigned to the assignee of the present invention, and is incorporated herein by reference, discloses a synchronized, compound mechanical transmission having an auxiliary input section, including an input splitter. The input shaft of the auxiliary section is non-disengageably mechanically connected to the vehicle engine, i.e., there is no torque converter or master clutch between the engine and the transmission. In the cited patent, the input splitter comprises friction clutch means which are engaged or disengaged in response to the operation by the driver of the clutch pedal, such that the input splitter effectively replaces the master clutch. However, in the device of the cited patent, an additional positive clutch disconnect is required downstream of the input splitter, to reduce the main transmission section inertia, in order to provide quicker, easier, and lower energy synchronization of the main section.

### SUMMARY OF THE INVENTION

Accordingly, it is an object of the present invention to provide an improved compound transmission of the type including a synchronized main transmission section and an input auxiliary section including a splitter, wherein smaller, less expensive synchronizers are required, and there is less wear on the synchronizers and the various elements of the shifting mechanism.

It is a related object of the present invention to provide such an improved compound transmission which results in less driver effort and fatigue, especially in connection with shifts through the neutral position of the shift mechanism and the shift forks.

The above and other objects of the invention are accomplished by the provision of an input auxiliary transmission system for a compound vehicular transmission comprising an auxiliary transmission section adapted to be connected in series between a vehicular prime mover, by means of a non-positive coupling, and a change-gear mechanical main transmission section. The auxiliary transmission section includes an input shaft, an auxiliary section output shaft, and input splitter means. The input splitter is operable in a first position to couple the auxiliary section output shaft to the input shaft at a first speed ratio, and is operable in a second position to couple the auxiliary output shaft to the input shaft at a second speed ratio. The input splitter is operable in a third position to permit independent rotation of the auxiliary output shaft, relative to the input shaft. A fluid pressure actuator is operable to move the input splitter means between the first and second positions. A shift mechanism is operable to shift change-gears of the main transmission section between a first gear and a second gear, through a neutral position.

The improved input auxiliary transmission system is characterized by the input splitter means comprising first and second jaw clutch means, actuation of the first and second jaw clutch means corresponding to the first and second speed ratios, respectively. A disengaged condition of each of the first and second jaw clutch means corresponds to the third position of the input splitter means. The fluid pressure actuator has a third position, operable to move the first and second jaw clutch means to the disengaged condition. The system includes means operable to sense the shift mechanism of the main transmission section being in a neutral condition. The system includes valve means operable, in response to the neutral condition being sensed, to communicate pressurized fluid from a source of pressurized fluid to the fluid pressure actuator, to move the actuator to the third position.

### BRIEF DESCRIPTION OF THE DRAWINGS

**FIG. 1** is a schematic illustration of a manually controlled transmission system utilizing the input auxiliary transmission section of the present invention.

**FIG. 2** is a fragmentary, axial cross-section of the input auxiliary transmission section shown schematically in FIG. 1.

**FIG. 3** is a fragmentary, axial cross-section of the actuator portion of the auxiliary section shown in FIG. 2, but on a somewhat larger scale than FIG. 2.

**FIG. 4** is a fragmentary, axial cross-section of another portion of the auxiliary section, on substantially the same scale as FIG. 3.

**FIG. 5** is a somewhat pictorial, pneumatic schematic of the auxiliary section of the present invention.

**FIG. 6** is a schematic illustration of a typical shift pattern for a transmission of the type illustrated schematically in FIG. 1.

### DESCRIPTION OF THE PREFERRED EMBODIMENT

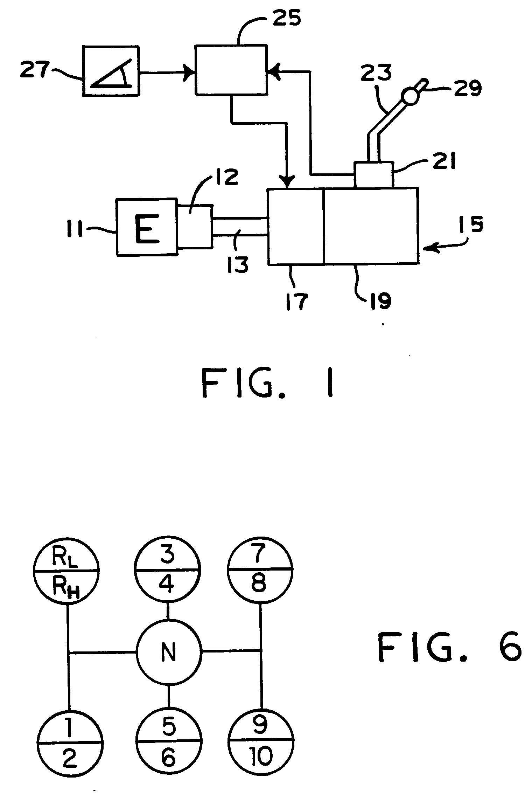

Certain terminology will be used in the following description for convenience and reference only, and will not be limiting. Words such as "upwardly", "downwardly", "rightwardly", and "leftwardly" will designate directions in the drawings to which reference is made. The words "forward" and "rearward" will refer respectively to the front and rear end of the transmission, or some portion thereof, as it is conventionally mounted in the vehicle, such being respectively from the left and right of the transmission, as illustrated in FIGS. 1 through 4.

The term "compound transmission" is used to designate a transmission having a main transmission section and an auxiliary transmission section connected in series, whereby the selected speed reduction in the main transmission section may be compounded by further selected speed reduction (or increase) in the auxiliary transmission portion. The term "input auxiliary section" is used to designate an auxiliary transmission section connected in series between the vehicular prime mover, such as the vehicle engine, and the input to the main transmission section. The term "splitter" in regard to a compound transmission as used herein will designate the compound transmission wherein the auxiliary transmission section is used to provide various selectable steps for subdivision of each of the gear ratios selected in the main transmission section. In a splitter type compound transmission, the main transmission section is typically provided with relatively wide ratio steps which are split or subdivided by the splitter type auxiliary transmission section. Splitter type compound transmissions are well known in the prior art, and examples thereof may be seen by reference to the above-incorporated U.S. Patent Nos. 3,741,035 and 4,485,692.

The term "synchronized transmission section" will designate a change-gear mechanical main transmission section wherein a selected gear is non-rotatably coupled to a shaft by means of a positive clutch, whereby attempted engagement of said clutch is prevented until the members of said clutch are rotating at substantially synchronous rotational speeds, and frictional means associated with the clutch members are sufficient, upon initiation of the clutch engagement, to cause the clutch members and all members rotating therewith, to rotate at a substantially synchronous speed of rotation.

Referring now to the drawings, which are not intended to limit the invention, FIG. 1 is a schematic in which a vehicular prime mover, such as an engine 11, is drivingly connected by means of a "non-positive" coupling such as a master clutch 12 (which may or may not follow a torque converter) and a transmission input shaft 13 to a compound change-gear transmission, generally designated 15. The transmission 15 comprises an input auxiliary transmission section 17, connected in series with a mechanical main transmission section 19.

Shifting gears in the main transmission section is accomplished manually by means of a shifting mechanism 21, including a manual shift lever 23. A controller 25 receives inputs signals from the main transmission section 19 and the shifting mechanism 21, as well as input signals from the clutch pedal 27. The manual shift lever 23 also includes a switch 29 for selecting the particular gear reduction (or increase) ratio of the input auxiliary transmission section 17, the signal from the switch 29 also being an input to the controller 25. As is well known to those skilled in the art, the switch 29 is frequently in the form of a selector button.

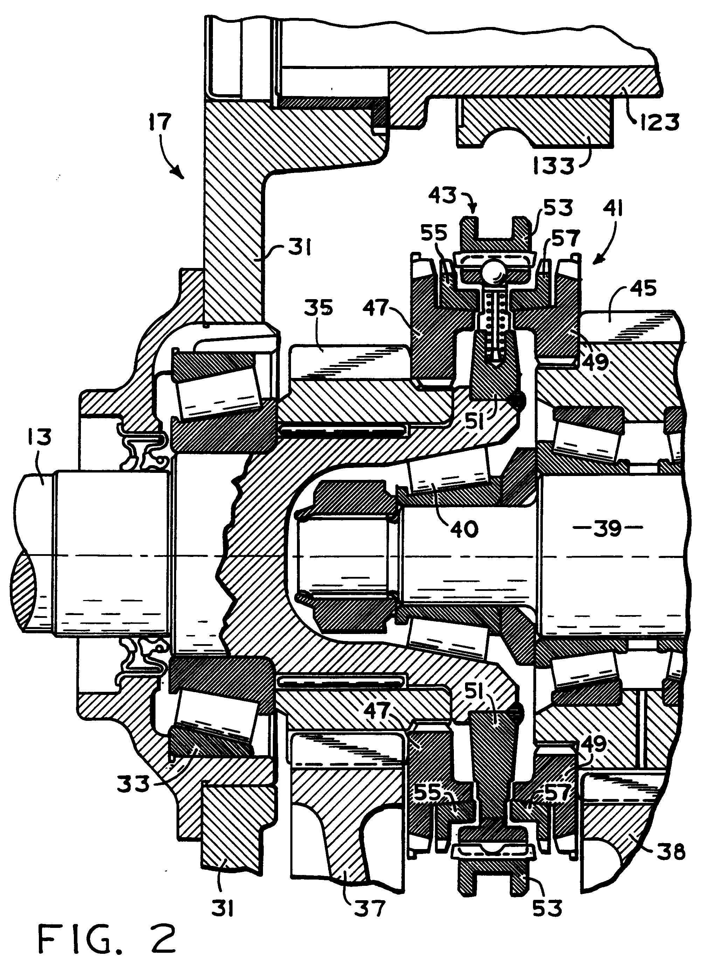

Referring now primarily to FIG. 2, there is a fragmentary view of the input auxiliary transmission section 17, showing that portion which is an important aspect of the present invention. The transmission input shaft 13 is rotatably supported relative to a transmission housing 31, by means of a set of bearings 33. The input shaft 13 carries an auxiliary section input gear 35, rotationally movable relative thereto, the input gear 35 being constantly meshed with an auxiliary section countershaft gear 37, which is shown only fragmentarily in FIG. 2.

As is well known to those skilled in the art, and as is shown in one or more of the above-incorporated patents, the countershaft gear 37 is carried by a countershaft (not shown), which also carries a second auxiliary section countershaft gear 38. The second countershaft gear 38 is constantly meshed with a second mainshaft gear 45, which is rotatably fixed to a main gearbox output shaft 39. A forward, reduced diameter portion of the output shaft 39 is rotatably supported, by means of a bearing set 40, within a tapered opening defined by the rearward end of the input shaft 13. The second mainshaft gear 45 also defines the input to the main transmission section 19 and may be rotationally fixed to the main gearbox output shaft 39 by means of a synchronizer in the main gearbox, controlled by the manual gear lever 23. Alternatively, the drive from the auxiliary section 17 to the main transmission section 19 may be by means of the countershaft, whereby the final connection to the main gearbox output shaft 39 is made through one of several pairs of gears and a manually controlled synchronizer, one for each of said pair of gears. Preferably, the main transmission section 19 is a simple transmission of the synchronized type as is well known in the prior art, and as may be seen in greater detail by reference to the above-incorporated U.S. Patent Nos. 4,081,319; 4,373,403; and 4,432,251.

The input auxiliary transmission section 17 includes an input splitter mechanism, generally designated 41. The input splitter 41 includes a synchronizer arrangement, generally designated 43, disposed axially between the auxiliary section input gear 35 and a second main shaft gear 45.

The synchronizer arrangement 43, which is now generally well known to those skilled in the art, comprises a clutch member 47, splined to the input gear 35, and a clutch member 49, splined to the second main shaft gear 45. The synchronizer 43 includes a hub or strut portion 51, which is fixed to the transmission input shaft 13 and rotates therewith. Surrounding the hub 51 is an internally splined, sliding clutch sleeve 53, which is axially movable to either the left or the right, from the neutral position shown in FIG. 2. Disposed axially between the sleeve 53 and the clutch member 47 is a synchronizer or baulking ring 55, and similarly, disposed axially between the sleeve 53 and the clutch member 49 is a synchronizer or baulking ring 57.

Referring now to FIG. 6, in conjunction with FIGS. 1 and 2, and assuming the vehicle driver has actuated the selector button 29 to select first gear, the driver would then move the manual shift lever 23 to a position corresponding to first/second gear in the main transmission section 19. An appropriate signal would be sent by the controller 25 to the input auxiliary transmission section 17, and to an actuator to be described subsequently, resulting in the clutch sleeve 53 being moved to the left in FIG. 2 with its internal splines engaging the external splines defined by the clutch member 47 and synchronizer ring 55. Thus, torque flows from the input shaft 13 through the hub 51, then through the sleeve 53, the clutch member 47, and the auxiliary section input gear 35, all of which rotate at the same speed. This condition constitutes, depending on the relative size of the gears, either a low auxiliary gear when top gear of the compound gearbox is direct drive, or an overdrive gear when the top gear of the compound gearbox is an overdrive or speed increasing gear.

As is well known to those skilled in the art, and will be described only briefly, in the event of a non-synchronous condition of the input shaft 13 and the input gear 35 (i.e., a substantially different rotating speed), the leftward movement in FIG. 2 of the sleeve 53 will engage the synchronizer ring 55 moving its internal conical friction surface into engagement with a mating, external conical friction surface defined by the clutch member 47. The result of this engagement of the conical friction surfaces is to cause the input shaft 13, the hub 51, and the clutch sleeve 53 to rotate at substantially the same speed as the clutch member 47 and input gear 35, thus permitting a synchronous engagement of the internal splines on the sleeve 53, with the external splines on the clutch member 47.

As will also be apparent those skilled in the art, the synchronizer arrangement 43 has another operating position, in which the sleeve 53 moves to the right from the neutral position shown in FIG. 2, into splined engagement with the clutch member 49, such that the second main shaft gear 45 rotates in unison with the input shaft 13, corresponding to a second ratio within the auxiliary section 17.

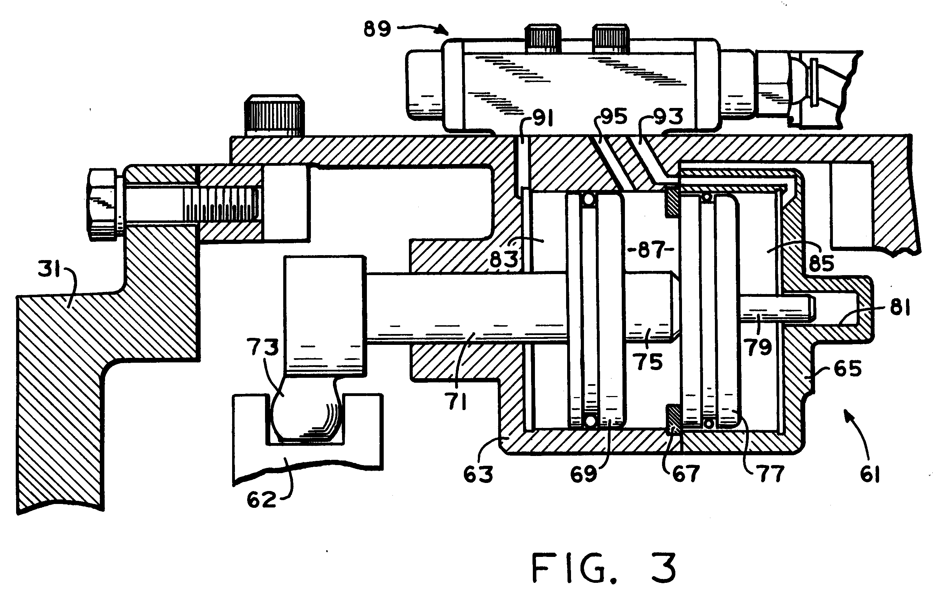

Referring now primarily to FIG. 3, there is illustrated an actuator assembly, generally designated 61, the function of which is to move a shift fork 62, which is operably associated with the clutch sleeve 53. The actuator assembly 61 moves the sleeve 53 between its neutral position (as shown in FIG. 2) and its first (leftward) and second (rightward) positions as described previously. The actuator assembly 61 comprises a piston-cylinder type arrangement attached to the transmission housing 31 defines a left cylinder portion 63, and attached thereto is a separate, right cylinder portion 65. The portion 65 may be attached to the portion 63 by any suitable means, not shown herein. Disposed between the left and right portions 63 and 65 is an annular stop member 67, the function of which will be described subsequently.

Disposed within the left cylinder portion 63 is a piston member 69, which includes a piston rod 71 extending to the left in FIG. 3 through the cylindrical portion 63, the piston rod 71 terminating in a linkage member 73. The linkage member 73 is received within an annular groove defined by the shift fork 62, such that reciprocal movement (from left to right, or vice-versa, in FIG. 3) causes axial movement of the sleeve 53 (from right to left, or vice versa), and therefore, movement of the synchronizer 43 between its neutral, first, and second positions described previously. The piston member 69 also includes a short rod or stop portion 75, extending to the right in FIG. 3.

Disposed within the right cylinder portion 65 is a piston member 77, including a small guide member 79, reciprocally disposed within a cylindrical opening 81 defined by the right cylinder portion 65.

The piston 69 cooperates with the cylinder portion 63 to define a pressure chamber 83, while the piston 77 cooperates with the right cylinder portion 65 to define a pressure chamber 85. Finally, the pistons 69 and 77 together define a pressure chamber 87, disposed axially therebetween. The function of the various chambers will be described subsequently.

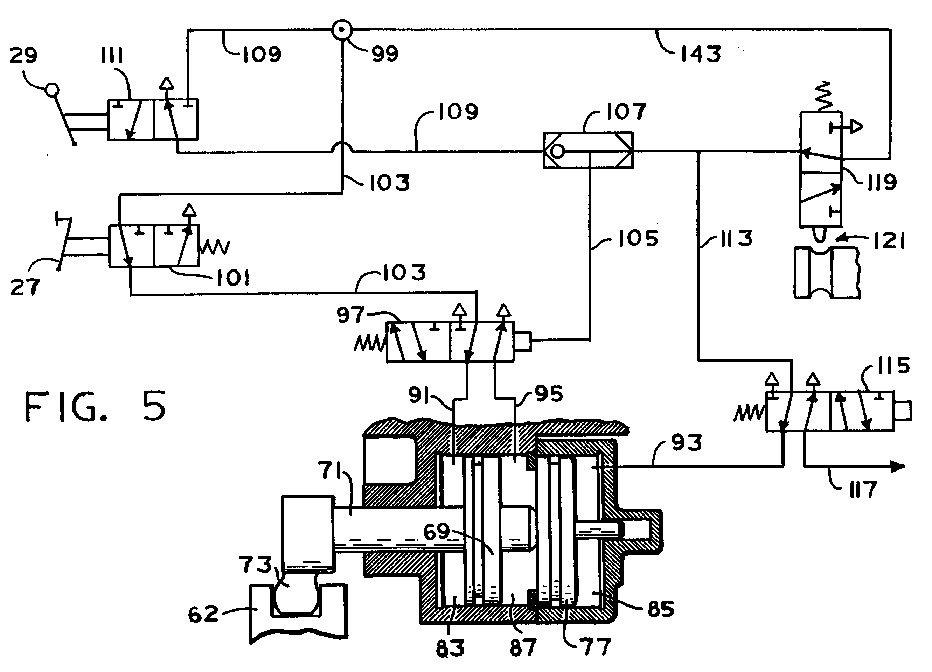

Attached to the transmission housing 31, and comprising part of the actuator assembly 61 is a pneumatic valve arrangement, generally designated 89 which will be described in greater detail in conjunction with the schematic of FIG. 5. The cylinder portions 63 and 65 cooperate to define air passages communicating between the pneumatic valve arrangement 89 and the various pressure chambers, including a passage 91 communicating with the chamber 83, a passage 93 communicating with the chamber 85, and a passage 95 communicating with the chamber 87.

Referring now primarily to FIG. 5, the overall control system comprising part of the actuator assembly 61 is illustrated schematically. Controlling communication of pressurized air to the chambers 83 and 87 is a splitter slave valve 97, which communicates pressurized air from a source 99 through a valve 101 controlled by the clutch pedal 27. The valve 97 is basically a directional control valve, communicating pressurized air in a pneumatic line 103 to either passage 91 or passage 95, depending upon the position of the valve 97, which is determined by the pressure in a pilot line 105. The pilot line 105 is connected with the outlet of a shuttle valve 107, with the left hand (in FIG. 5) inlet to the shuttle valve being a pneumatic line 109. Interposed in the line 109 is a splitter master valve 111, the position of which is controlled by the selector button 29. The right hand inlet to the shuttle valve 107 is connected (teed into) a pneumatic line 113 which, in turn, is connected to a 2-position, solenoid valve 115. The solenoid valve 115 is connected to the passage 93, to control the pressure in the chamber 85, and is also connected by means of a line 117 with another function, which will not be described further herein. Also teed into the line 113 is one side of a neutral valve 119, which is a 2-position, 3-way valve. The position of the neutral valve 119 is controlled by a detent arrangement, generally designated 121.

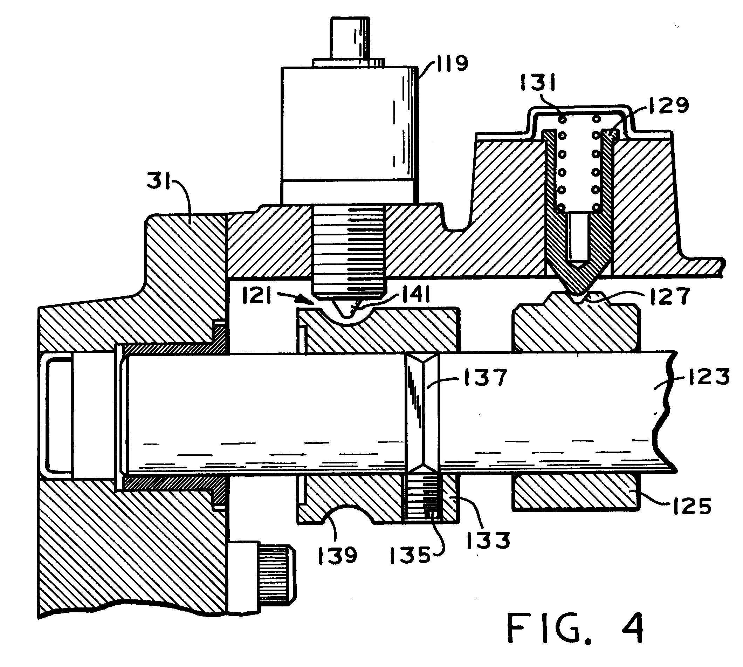

Refer now primarily to FIG. 4, which is a view taken toward the forward end of the auxiliary section 17, similar to FIG. 3, but on a different plane than FIG. 3. As part of the manual shifting mechanism 21 (see FIG. 1), there is included a selector shaft 123, the forward end of which is journalled within an opening within the transmission housing 31. The selector shaft 123 carries the shift forks (not shown herein) for changing gear ratios in the main transmission section 19. Disposed on the selector shaft 123 is a detent, which defines a generally V-shaped notch 127. Extending through the wall of the transmission housing 131 is a detent member 129. When the shifting mechanism 21 and the selector shaft 123 are in the neutral position shown in FIG. 4, the innermost end of the detent member 129 is received within the notch 127. Movement of the shaft 123 in either direction from the neutral position of FIG. 4 requires moving the detent member outwardly, in opposition to the biasing force of a spring 131.

Disposed to the left in FIG. 4 of the detent collar 125 is another detent collar 133, which may be fixed, axially, relative to the shaft 123 by any suitable means, such as a set screw 135, received in an annular V-shaped groove 137 defined by the shaft 123. The collar 133 defines an annular detent groove 139, although it should be understood that the particular configuration of the groove 139 is not essential. However, the configuration of the groove must be accurately controlled so that it lifts the valve between the point where the synchronization of the gear being selected (in the main gearbox) is complete, and the final movement of the selection rod.

In threaded engagement with an opening in the wall of the housing 31 is the neutral valve 119, shown schematically in FIG. 5. With the shaft 123 in the neutral position shown in FIG. 4, the detent groove 139 receives a radially inwardly-extending detent member 141. Thus, the detent collar 133, the detent groove 139, and the detent member 141 comprise the detent arrangement 121 shown in FIG. 5.

Referring now to FIGS. 3, 4, and 5 together, it will first be assumed that the main transmission section 19 is in a gear-engaged position, such that the selector shaft 123 is moved either to the left or to the right in FIG. 4 away from the neutral position shown. In the gear-engaged position, with the detent collar 133 moved either to the left or to the right with the shaft 123, the detent member 141 is in engagement with the outer cylindrical surface of the collar 133, thus moving the neutral valve 119 to its uppermost position in FIG. 5. In that position, the line 113 is vented to atmosphere, and with the selector button 29 in the unactuated position shown in FIG. 5, the line 109 is also vented to atmosphere, as is the pilot line 105 connected to the outlet of the shuttle 107. Thus, the slave valve 97 is shifted to the right in FIG. 5 such that, with the clutch pedal depressed as shown in FIG. 5, pressurized air is communicated through the line 103 to the passage 95. As a result, the chamber 87 is pressurized, while both of the chambers 83 and 85 are vented to atmosphere, such that the piston 69 moves to the left end of the cylinder, while the piston 77 moves to the right end of the cylinder. Such movement shifts the clutch sleeve 53 to the right in FIGS. 2, 3, and 5, to the second ratio position described previously. Although the subject embodiment of the invention utilizes pressurized air, it should be understood that the invention is not so limited, and the use hereinafter, and in the appended claims, of the term "fluid" will be understood to mean and include both hydraulic fluid and air (pneumatic pressure).

If the driver wishes to shift to the first, low ratio, it is necessary to actuate the selector button 29, moving the master valve 111 to the right in FIG. 5, communicating pressurized air through the line 109 to the left inlet of the shuttle 107, thus communicating pressure through the pilot line 105 to the valve 97. Pressure in the pilot line 105 biases the valve 97 to the position shown in FIG. 5, such that, when the clutch pedal 27 is depressed as shown, the pressurized air flowing through the line 103 is now communicated to the passage 91 and the pressure chamber 83. At the same time, the chambers 85 and 87 are vented to atmosphere, such that the piston 69 moves to the right in the cylinder, moving the piston 77 to the right end of the cylinder, until the piston 69 engages the stop member 67. In this position, the sleeve 53 is shifted to the left from the neutral position, to the first, low ratio position described previously.

Whenever the driver initiates a shifting operation, such that the shifting mechanism 21 and the selector shaft 123 approach, or pass through, the neutral position shown in FIG. 4, the detent member 141 is able to fully extend into the groove 139, such that the neutral valve 119 moves to its downward-most position, as shown in FIG. 5. In that position of the neutral valve 119, pressurized air flows through a line 143 from the source 99, thus pressurizing both the line 113 and the right inlet of the shuttle 107. At the same time, the solenoid valve 115 is actuated from the position shown in FIG. 5. The valve 97 stays in, or is shifted to the position shown in FIG. 5 because the pilot line 105 is pressurized, being connected through the shuttle 107 with the pressure in the line 143. During the shifting operation described above, the clutch pedal 27 is depressed, as shown in FIG. 5, such that pressure is communicated through the line 103 to the passage 91, and into the chamber 83, while the chamber 87 is vented to atmosphere. Thus, the piston 77 is biased by pressure in the chamber 85 to the position shown in FIGS. 3 and 5, against the stop 67. At the same time, the piston 69 is biased by pressure in the chamber 83 (and with no "resistance" from the chamber 87) to the position shown in FIGS. 3 and 5, with the stop portion 75 of the piston 69 disposed against the piston 77.

As a result of the pressure in the chambers 83 and 85, the piston 69 is held in a centered or neutral position, and thus holds the clutch sleeve 53 in its neutral position shown in FIG. 2, not engaging either of the clutch members 47 or 49. With the synchronizer 43 held in this neutral position while the shift of the main transmission section 19 is occurring, all of the inertia is removed "upstream" of the gear change which is to be made. For example, assuming that there is a master clutch associated with the transmission input shaft 13, the size and weight of the clutch plate or flywheel accounts for the major portion of the total inertia. Most of the rest of the inertia seen at the gears being shifted results from the size and weight of various gears on both the main shaft and the countershaft of the auxiliary section 17. By eliminating a major portion of the inertia as the main transmission section 19 passes through neutral, prior to making a gear shift, it is possible for the synchronizers in the main section 19 to be much smaller and less expensive.

The invention has been described in great detail in the foregoing specification, and it is believed that various alterations and modifications of the invention will become apparent to those skilled in the art from a reading and understanding of the specification. It is intended that all such alterations and modifications are included in the invention, insofar as they come within the scope of the appended claims.

## Claims

1. An input auxiliary transmission system for a compound vehicular transmission (15) comprising an auxiliary transmission section (17) adapted to be connected in series between a vehicular prime mover (11), by means of a non-positive coupling (12), and a change-gear mechanical main transmission section (19), said auxiliary transmission section (17) including an input shaft (13), an auxiliary section output gear (45), and input splitter means (41) operable in a first position to couple said auxiliary section output gear to said input shaft at a first speed ratio, and operable in a second position to couple said auxiliary output gear to said input shaft at a second speed ratio, and operable in a third position (FIG. 2) to permit independent rotation of said auxiliary output gear, relative to said input shaft; a fluid pressure actuator (61) operable to move said input splitter means (41) between said first position and said second position; and a shift mechanism (21) operable to shift change-gears of said main transmission section (19), between a first gear and a second gear, through a neutral position (FIG. 4); characterized by:
(a) said input splitter means (41) comprises first (53,47) and second (53,49) jaw clutch means, actuation of said first and second jaw clutch means corresponding to said first and second speed ratios, respectively;
(b) a disengaged condition of each of said first (53,47) and second (53,49) jaw clutch means corresponding to said third position (FIG. 2) of said input splitter means;
(c) said fluid pressure actuator (61) having a third position (FIG. 3) operable to move said first (53,47) and second (53,49) jaw clutch means to said disengaged condition;
(d) means (121) operable to sense said shift mechanism (21) of said main transmission section (19) being in a neutral condition (FIG. 4);
(e) valve means (89) operable, in response to said neutral condition being sensed, to communicate pressurized fluid from a source (99) of pressurized fluid to said fluid pressure actuator (61) to move said actuator to said third position (FIG. 3).

2. An input auxiliary transmission system as claimed in claim 1, characterized by said non-positive coupling comprising a disengageable master clutch (12).

3. An input auxiliary transmission system as claimed in claim 1, characterized by said main transmission section (19) comprising a synchronized transmission section.

4. An input auxiliary transmission system as claimed in claim 1, characterized by said fluid pressure actuator (61) comprising a cylinder (63,65), piston means (69,77) slidably disposed within said cylinder and cooperating therewith to define first (87) and second (83) fluid chambers; pressurized fluid in said first fluid chamber (87) moving said piston means (69,77) to a first position, operable to actuate said first jaw clutch means (53,47), and pressurized fluid in said second fluid chamber (83) moving said piston means (69,77) to a second position, operable to actuate said second jaw clutch means (53,49).

5. An input auxiliary transmission system as claimed in claim 4, characterized by said cylinder (63,65) defining a neutral stop (67), and said piston means including a primary piston member (69) and a secondary piston member (77) cooperating with said cylinder to define a third fluid chamber (85), fluid pressure in said third fluid chamber biasing said secondary piston member (77) into engagement with said neutral stop (67), said primary piston member (69), then being in said third position (FIG. 3), intermediate said first and second positions, operable to maintain said first (53,47) and second (53,49) jaw clutch means in said disengaged condition.

6. An input auxiliary transmission system as claimed in claim 5, characterized by said cylinder (63,65), said primary piston member (69), and said secondary piston member (77) cooperating to define said first fluid chamber (87), said first fluid chamber being disposed intermediate said second (83) and third (85) fluid chambers.

7. An input auxiliary transmission system as claimed in claim 1, characterized by said input splitter means (41) comprises a clutch collar (53) disposed axially between, and shiftable into engagement with first (47) and second (49) clutch members, engagement of said clutch collar and said first clutch member comprising said first jaw clutch means, and engagement of said clutch collar and said second clutch member comprising said second jaw clutch means.

8. An input auxiliary transmission system as claimed in claim 7, characterized by said clutch collar (53) being operably associated with said fluid pressure actuator (61), whereby said third position (FIG. 3) of said actuator comprises said clutch collar being disposed axially between, and out of engagement with, both of said first (47) and second (49) clutch members.
